# EUROPEAN PATENT SPECIFICATION

(11) **EP 1 382 134 B1**
(45) Date of publication and mention of the grant of the patent: **11.09.2013**
(21) Application number: 02766810.2
(22) Date of filing: 24.04.2002
(51) Int. Cl.: H04B 7/185

(54) **COMMUNICATION METHOD WITH A COMBINATION OF FIXED AND MOBILE PLATFORM SATELLITE SERVICES**
KOMMUNIKATIONSVERFAHREN MIT EINER KOMBINATION VON FEST- UND MOBILPLATTFORMSATELLITENDIENSTEN
PROCEDE DE COMMUNICATION A COMBINAISON DE SERVICES PAR SATELLITE POUR PLATE-FORME MOBILE ET FIXE

(30) Priority: 27.04.2001 US 844473
(43) Date of publication of application: 21.01.2004
(73) Proprietor: The Boeing Company, Chicago, IL 60606-2016 (US)
(72) Inventor: STEPHENSON, Gary, V., Bellevue, WA 98006 (US)
(74) Representative: Lindner, Michael
(86) International application number: PCT/US2002/013068
(87) International publication number: WO 2002/089359

(56) References cited:
- US-A- 6 147 980
- MANOHAR R: "Spectrum considerations for satellite based personal communication systems" PERSONAL WIRELESS COMMUNICATIONS, 1994., IEEE INTERNATIONAL CONFERENCE ON BANGALORE, INDIA 18-19 AUG. 1994, NEW YORK, NY, USA,IEEE, 18 August 1994 (1994-08-18), pages 135-141, XP010211453 ISBN: 0-7803-1996-6
- 'Federal Communications Commision FCC 00-148', [Online] 08 December 2000, WASHINGTON, pages 1 - 192 Retrieved from the Internet: <URL:http://hraunfoss.fcc.gov/edocs_public/ attachmatch/FCC-00-418A1.pdf> [retrieved on 2011-07-12]

## Description

### FIELD OF THE INVENTION

The present invention relates to communication systems, and more particularly to communication systems for mobile platforms.

### BACKGROUND OF THE INVENTION

Broadband communication access, on which our society and economy is growing increasingly dependent, has generally not been readily available to users on board mobile platforms such as aircraft, ships, trains, automobiles or handheld devices. While the technology exists to deliver the broadband communication services to mobile platforms, conventional solutions are commercially unfeasible due to the relatively high costs and/or due to low data rates. These conventional solutions have therefore only been available to government/military users and/or to high-end maritime markets such as cruise ships.

One obstacle limiting mobile platform broadband services has been the limited availability of bandwidth that is governed in the United States by the Federal Communications Commission (FCC) and other governing bodies outside the United States. The FCC set aside the Ku bandwidth between 10.7 and 15.0 GHz for the Fixed Satellite Service (FSS). Current regulations require transmissions from a fixed location such as a ground station. When mobile platforms such as airplanes receive FSS, they typically use services such as Airphone® for the return link. The airplanes do not currently use FSS for the return link because airplanes are mobile and do not currently fall within the FCC rules. The Airphone(R) services fail to provide sufficient bandwidth on the return link for the typical user. Therefore, when passengers attempt to send large files, the connection time is prohibitive from cost and dwell time perspectives.

The FCC and other governing bodies also strictly limit the power spectral density (PSD) of communication systems providing data services on the Ku band. In other words, the bandwidth, dynamic range, and interference patterns of communication systems providing data services on the Ku band are restricted to prevent interference with other neighboring satellites. The document MANOHAR R: "Spectrum considerations for satellite based personal communication systems" PERSONAL WIRELESS COMMUNICATIONS, 1994., IEEE INTERNATIONAL CONFERENCE ON BANGALORE, INDIA 18-19 AUG. 1994, NEW YORK, NY, USA, IEEE, 18 August 1994 (1994-08-18), pages 135-141, XP010211453, ISBN: 0-7803-1996-6 shows that the technological advantages in Mobile Satellite Systems (MSS) have brought the world to the threshold of realization of the ultimate in personal wireless communications, the hand-held satellite telephone - that could keep us in touch with each other, any time, any where, whenever needed. Inmarsat, the pioneering Mobile Satellite Service organization providing services all across the globe, has been engaged in this evolutionary process of developing increasingly smaller mobile earth station in keep with the service demands. Satellite based personal communication services are basically an integral part of MSS and could be provided through non-GSO mobile satellites in the service link spectrum allocated to MSS. Feederlinks to MSS satellites are generally accommodated in the spectrum allocated to FSS. The document discusses various technical and regulatory aspects associated with the selection of frequency spectrum for a satellite based PCS system and identifies some possible solutions. Further, document US 6 147 980 shows a data message routing and delivery system for an air traffic control system includes a communications network with one or more ground processing nodes, one or more satellite processing nodes, and one or more avionics processing nodes each configured to send and receive data packets to and from others network processing nodes in the communications network. One or more transmission prioritizing controllers are provided to determine the locations of each of network processing node, and to control access to communication channels and routing of data messages in order of priority between the network processing nodes. An application executing on one network processing node is send to an application executing on another network processing node under the control of the transmission prioritizing controllers. The transmission prioritizing controllers determine the priority ranking of each data packet and cause each data packet to be routed over a communication channel according to its priority ranking from one network node to another until it reaches its destination. Furthermore, document "Federal Communications Commission FCC 00-148", 8 December 2000 (2000-12-08), pages 1-192, Washington, retrieved from the Internet: URL:http://hraunfoss.fcc.gov/edocs_public/attachmatch/FCC-00-418A1.pdf [retrieved on 2011-07-12] shows a new terrestrial fixed Multichannel Video Distribution and Data Service ("MVDDS") that is shown to operate in the 12.2-12.7 GHz band on a non-harmful interference basis with incumbent Broadcast Satellite Services ("BSS") , and on a co-primary basis with the NGSO FSS.

Therefore, a broadband communication system that provides users with sufficient forward and return bandwidth for entertainment, Internet, email and other services on board mobile platforms would be desirable.

### SUMMARY OF THE INVENTION

In view of the above, an invention as defined in the independent claims is provided. A communication system for mobile platforms according to the invention includes a mobile platform including a receiver subsystem (RS) and a satellite in communication with the RS. A ground station includes a transmitter subsystem (TS) that transmits a forward link to the satellite and the mobile platform that includes Fixed Satellite Service (FSS) data in a first frequency band and Mobile Platform Satellite Service (MPSS) data in the first frequency band.

A mobile platform network is connected to the first RS. User communication devices (UCD) are connected to the mobile platform network. The first frequency band is the Ku frequency band between 10.7 and 15.0 GHz and the forward link may lie between 11.7 and 12.2 GHz. Other countries may employ different frequency bands for the forward and return links within the Ku band.

In still other features of the invention, the FSS and MPSS data employ Internet Protocol (IP) packets. The TS of the ground station may employ IP packet-based compression. The TS of the ground station may employ IP packet-based encryption. The TS of the ground station assigns one or more IP addresses to the FSS data on the forward link.

The communication system for mobile platforms includes a mobile platform with a transmitter subsystem (TS). A satellite is in communication with the TS. A ground station includes a receiver subsystem (RS). The TS of the mobile platform transmits a return link to the satellite and the ground station that includes Fixed Satellite Service (FSS) data in a second frequency band and Mobile Platform Satellite Service (MPSS) data in the second frequency band.

A mobile platform network is connected to the TS. User communication devices (UCD) are connected to the mobile platform network. The second frequency band is the KU frequency band between 10.7 and 15.0 GHz. The return link may be between 14.0 and 14.5 GHz. The TS of the mobile platform employ bulk compression on the FSS and MPSS data. The TS of the mobile platform may employ bulk encryption and padding on the FSS and MPSS data.

The TS of the mobile platform applies multiple access coding to the FSS and MPSS data on the return link. The multiple access coding may be CDMA, TDMA, or FDMA.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

FIG. 1 illustrates a combined Mobile Platform Satellite Service (MPSS) and Fixed Satellite Service (FSS) system according to the invention;

FIG. 2 illustrates an exemplary mobile platform receiver transmitter subsystem (RTS) and a mobile platform passenger network;

FIG. 3 illustrates signal processing steps performed by a forward link ground transmitter subsystem (TS);

Fig. 4 illustrates signal processing steps performed by a forward link mobile platform receiver subsystem (RS) and by a FSS forward TS;

Fig. 5 illustrates signal processing steps performed by a return link mobile platform TS and the FSS return RS;

Fig. 6 illustrates signal processing steps performed by a return link ground RS;

Fig. 7 illustrates the power spectral density (PSD) of a combined MPSS and FSS signal; and

Fig. 8 illustrates steps for combining the MPSS and FSS data services.

### DETAILED DESCRIPTION OF THE PREFERRED EMBODIMENTS

The following description of the preferred embodiment(s) is merely exemplary in nature and is in no way intended to limit the invention, its application, or uses.

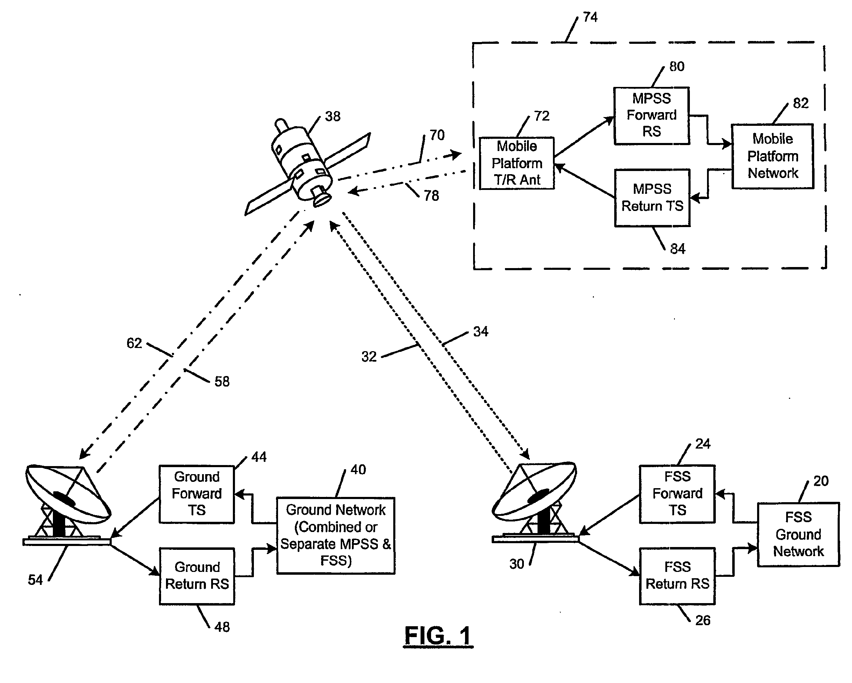

Referring now to Fig. 1, a fixed satellite service (FSS) ground network 20 is connected to a FSS forward transmitter subsystem (TS) 24 and to a FSS return receiver subsystem (RS) 26. The FSS forward TS 24 and the FSS return RS 26 are connected to a ground station 30 with a fixed antenna. The FSS forward TS 24 and the ground station 30 transmit a forward link 32 to a satellite 38. The FSS return RS 26 and the ground station 30 receive a return link 34 from the satellite 38.

A ground network 40 is connected to a ground forward TS 44 and a ground return RS 48. The ground network 40 is a combined Mobile Platform Satellite Service (MPSS) and FSS system or separate MPSS and FSS systems. If the mobile platform is an airplane or ship, the MPSS may be referred to as the Aeronautical Mobile Satellite Service (AMSS). The ground forward TS 44 and the ground return RS 48 are connected to a ground station 54 that is a fixed antenna. The ground forward TS 44 and the ground station 54 transmit a forward link 58 to the satellite 38. The ground return RS 48 and the ground station 54 receive a return link from the satellite 38 via return link signals 62. Preferably, geosynchronous satellites are employed. Other types of satellite systems may also be employed. For example, medium and low earth orbit satellite systems may be employed. In such a case, the ground stations communicate with different satellites over time.

The ground stations 30 and 54 (via the satellite 38) transmit one or more forward links 70 to a transmit/receive antenna system 72 on a mobile platform 74 and receives one or more return links 78 from the mobile platform 74. The mobile platform 74 includes a MPSS forward RS 80 and a MPSS return TS 84 that are connected to a mobile platform network 82.

In use, the FSS forward TS 24 provides multimedia content such as movies on demand, Internet services, phone service, music videos, and other data services to the mobile platform 74 via the satellite 38. The MPSS forward RS 80, the MPSS return TS 84, the ground forward TS 44 and the ground return RS 48 provide broadband communications such as Internet access to passengers on the mobile platform 74. The FSS ground stations may be combined with the MPSS ground station or may remain as a separate ground station. As will be described further below, the MPSS and FSS signals share the same bandwidth. The present invention also takes advantage of the ability to increase the dish size of the FSS ground station to increase the main lobe and decrease the side lobes of the FSS signal. The AMSS system is partially limited by the antenna that can be carried by the mobile platform.

Currently FSS services are located in the Ku band that lies between 10.7 and 15.0 GigaHertz (GHz). In the United States, the forward link lies between 11.7 and 12.2 GHz and the return link lies between 14.0 and 14.5 GHz. Europe and other continents have different forward and return link frequency ranges in the Ku band.

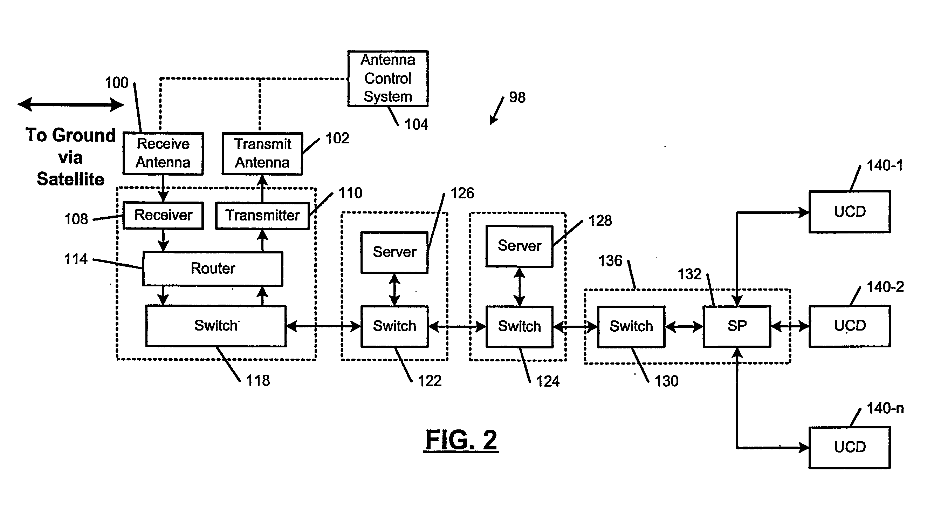

Referring now to Fig. 2, an exemplary communication system 98 for the mobile platform 74 is illustrated. The transmit and receive antenna system 72 includes a receive antenna 100 and a transmit antenna 102 that are controlled by an antenna control system 104. The receive antenna 100 is connected to a receiver 108 and the transmit antenna 102 is connected to a transmitter 110. The receiver 108 and the transmitter 110 are connected to a router 114 that is connected to a switch 118.

The switch 118 is connected to one or more additional switches 122 and 124 that are associated with servers 126 and 128. The switch 124 is connected to a switch 130 that is associated with a seat processor 132. The switch 130 and the seat processor 132 are generally referred to as a seat electronic box (SEB) 136. Seat processor 132 is typically connected to one or more user communication devices 140-1, 140-2, ..., 140-n.

The user communication devices 140 are preferably a laptop, a personal digital assistant (PDA), or any other electronic device that includes a processor, memory, and an input/output interface. The user communication device further includes a browser such as Internet Explorer®, Netscape Navigator® or any other suitable browser. The user communication device 140 may be supplied by the operator of the mobile platform 74. The user communication device 140 can be integrated with seat entertainment electronics. Skilled artisans can appreciate that the mobile platform network can be varied without departing from the spirit and the scope of the invention. The servers 126 and 128 are typically associated with aircraft interface electronics, web services, media services, and other onboard services. Skilled artisans will appreciate that the exemplary mobile platform network 82 can be changed without departing from the invention.

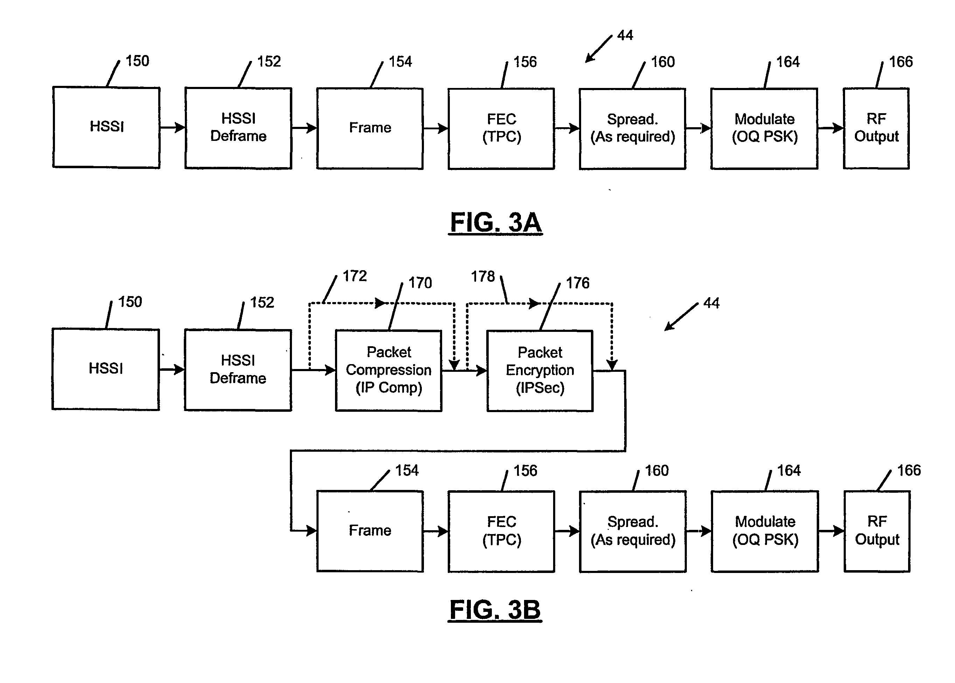

Referring now to Fig. 3A, signal path functions for the ground forward TS 44 that generates the forward link 58 that contains MPSS and FSS services are illustrated in greater detail. The ground forward TS 44 receives data on a high-speed serial interface (HSSI) in step 150. The ground forward TS 44 deframes the HSSI signal in step 152. In step 156, the ground forward TS 44 applies a forward error correction (FEC) function. In a preferred embodiment, turbo product code (TPC) FEC is employed. Other types of FEC such as Reed Solomon FEC can be employed as well.

In step 160, the ground forward TS 44 optionally employs spread spectrum techniques to increase the data rates if required. Preferably, direct sequence spread spectrum is employed if spread spectrum techniques are used. In step 164, the signal is modulated. In a preferred embodiment, the signal is modulated using offset quadrature (OQ) phase shift keying (PSK). In step 166, the ground forward TS 44 and the ground station 54 transmit the RF signal to the satellite 38.

Referring now to Fig. 3B, reference numerals from Fig. 3A will be used for purposes of clarity to identify the same steps. Additional steps may be performed by the ground forward TS 44. After step 152, a packet compression step 170 employing Internet Protocol (lP) compression is optionally performed. Alternately, a bypass step 174 may be performed. In addition, a packet encryption step 176 is optionally performed. Alternately, a bypass step 178 may be performed.

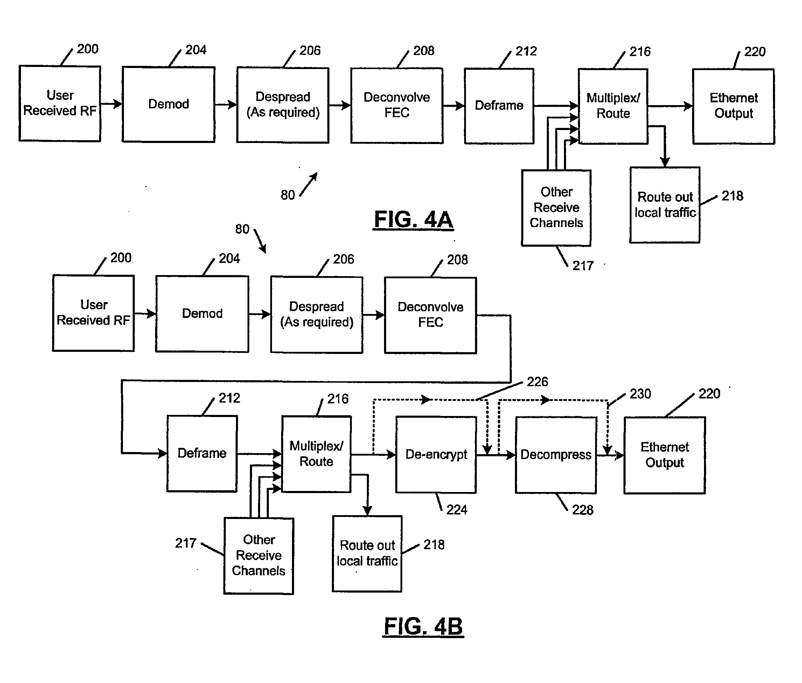

Referring now to Fig. 4A, the signal path functions for the MPSS forward RS 80 and the FSS forward TS 24 are illustrated in greater detail. The following discussion will only refer to the MPSS forward RS 80 to simplify the discussion. In step 200, the RF signal from the ground forward RTS 44 is received. In step 204, the RF signal is demodulated. In step 206, the MPSS forward RS 80 despreads if spread spectrum is performed by the ground forward TS 44. In step 208, the MPSS forward RS 80 deconvolves the FEC by applying an inverse function of the FEC employed by the ground forward TS 44. In step 212, the MPSS forward RS 80 deframes the signal to remove padding bits and other artifacts of encoding performed by the ground forward TS 44.

In step 216, the MPSS forward RS 80 performs multiplex/routing. Other receive channels that are similar to the channel shown (and identified by elements 200 - 212 in Fig. 4A) are provided as inputs at 217. Local traffic for system control (such as key exchange, (DAMA) rate changes, and power control) is removed at 217. In step 220, an Ethernet output is provided to the mobile platform network 82.

Referring now to Fig. 4B, reference numerals from Fig. 4A will be used for purposes of clarity to identify the same steps. Additional signal processing steps may be performed by the MPSS forward RS 80. After step 216, a de-encryption step 224 is optionally performed. Alternately, a bypass step 226 is performed. In step 228, a decompression step is optionally performed. Alternately, a bypass step 230 is performed.

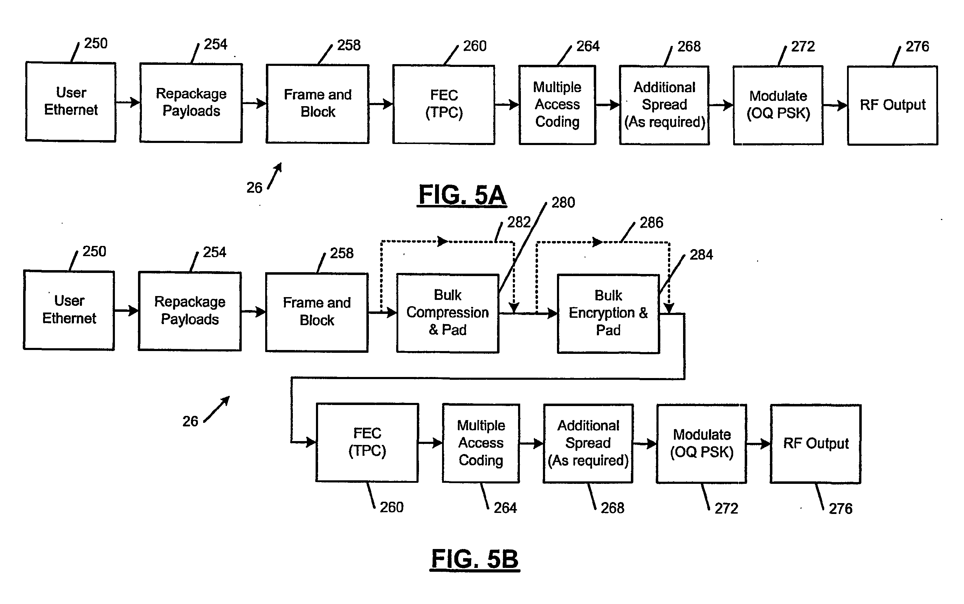

Referring now to Fig. 5A, the signal path functions for the FSS return RS 26 and the MPSS return TS 84 are shown in greater detail. The following discussion will only refer to the FSS return RS 26 to simplify the discussion. In step 250, a user Ethernet signal is received by the FSS return RS 26. In step 254, the FSS return RS 26 repackages the payloads. In step 258, the FSS return RS 26 performs framing and blocking. In step 260, the FSS return RS 26 applies FEC such as TPC or other suitable FEC functions. In step 264, the FSS return RS 26 performs multiple access coding. In a preferred embodiment, code division multiple access (CDMA), frequency division multiple access (FDMA), time division multiple access (TDMA) or any other suitable multiple access coding is employed. Another suitable multiple access coding method is disclosed in U.S. Patent No. 5,103,459, which is hereby incorporated by reference.

In step 268, the FSS return RS 26 employs spread spectrum to increase the data rate if required. In step 272, the FSS return RS 26 modulates the signal. Preferably, the modulation is OQ PSK or other suitable modulation. In step 276, the FSS return RS 26 provides an RF output signal to the FSS ground network 20.

Referring now to Fig. 5B, reference numerals from Fig. 5A have been used for purposes of clarity to identify the same steps. Additional signal processing steps may be performed by the FSS return RS 26. After step 258, the FSS return RS 26 optionally performs bulk compression and padding in step 280. Alternately, a bypass step 282 is performed. The FSS return RS 26 optionally performs bulk encryption and padding in step 284. Alternately, a bypass step 286 is performed.

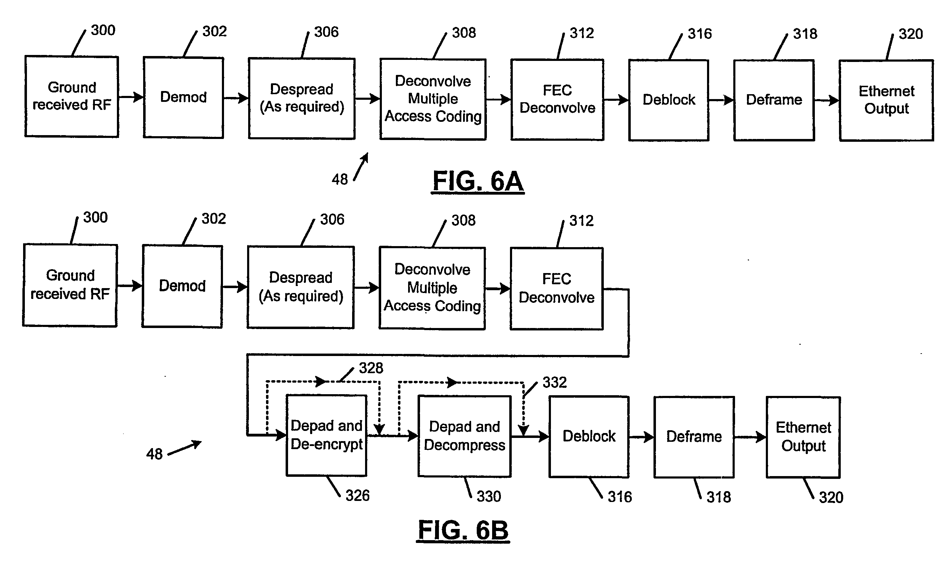

Referring now to Fig. 6A, the signal path functions of ground return RS 48 is illustrated in greater detail. In step 300, the ground return RS 48 receives the RF signal. In step 302, the ground return RS 48 demodulates the RF signal from the MPSS return TS 84 on the mobile platform 74. In step 306, the ground return RS 48 despreads the signal if spread spectrum is used by the MPSS return TS 84. In step 308, the ground return RS 48 deconvolves the multiple access coding that is employed by the FSS return RS 26. In step 312, the ground return RS 48 deconvolves the FEC by applying an inverse FEC function. In steps 316 and 318, the ground return RS 48 deblocks and deframes the signal, respectively. In step 320, the ground return RS 48 provides an Ethernet output to the ground network 40.

Referring now to Fig. 6B, reference numbers from Fig. 6A will be used for purposes of clarity to identify the same steps. Additional signal processing steps may be performed by the ground return RS 48. After step 312, the ground return RS 48 optionally depads and de-encrypts the signal in step 326. Alternately, a bypass step 328 is performed. In step 330, the ground return RS 48 optionally depads and decompresses the signal. Alternately, a bypass step 332 is performed.

As can be appreciated from the foregoing, the mobile platform communication system optionally employs asymmetric compression and encryption on the forward and return links. The forward links employ IP-packet based compression and encryption and the return links employ bulk compression and encryption. FSS-only ground stations 30 use the same forward and return link bandwidths and different RS and multiple access coding. Each mobile platform has a unique IP address.

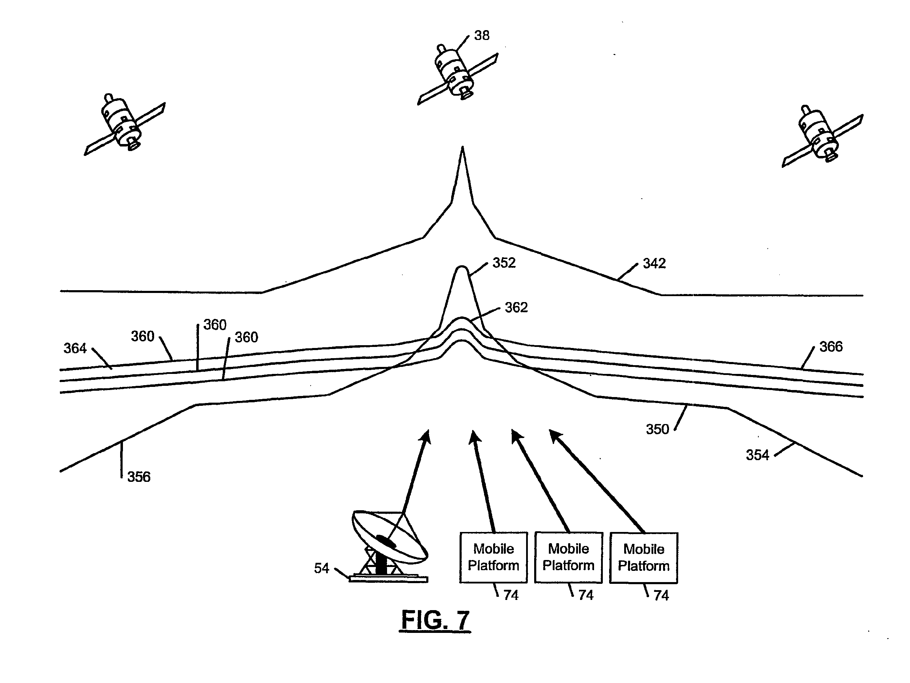

Referring now to Fig. 7, the power spectral density (PSD) of the combined MPSS and FSS signal on return links between the mobile platforms 74 and the satellite 38 and between the ground station 54 and the satellite 38 are illustrated. The target satellite transponders 38 and the neighboring satellite transponders 340 are illustrated in relation to an idealized aggregate PSD limit 342 per transponder. An idealized PSD 350 for FSS typically has a high main lobe 352 and low side lobes 354 and 356. In contrast, an idealized PSD 360 for MPSS typically has a relatively low main lobe 362 and relatively high side lobes 364 and 366. The main lobe 352 can be optimized because the FSS is ground-based. Therefore, the dish size, signal strength and directivity can be controlled more readily than mobile platform antennas.

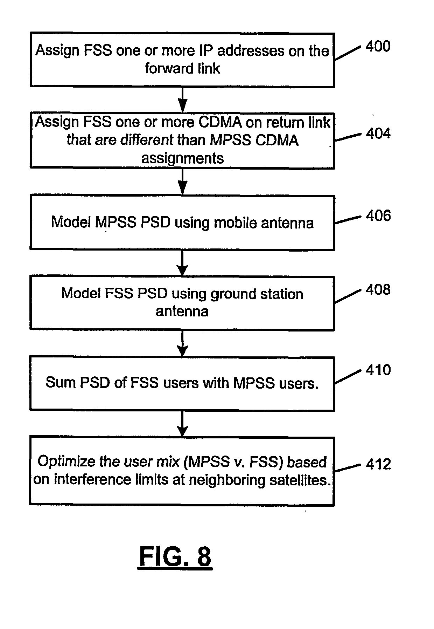

Referring now to Fig. 8, steps for combining FSS and MPSS signals are illustrated. In step 400, the FSS user is assigned one or more IP addresses on the forward link. In other words, the FSS is treated as if it were one or more mobile platform(s). In step 404, the FSS user is assigned one or more multiple access codes on the return link that have not been assigned to other MPSS users. The different main lobe and side lobe energy distributions for the MPSS and the FSS users is taken into account such that the FSS users have a much higher main lobe energy and much lower side lobes energies. In step 406, the MPSS PSD is modeled based on the mobile platform antenna that is used. In step 408, the FSS PSD is modeled based on the ground station antenna. In step 410, the PSD of FSS and MPSS users is summed and tracked. In step 412, the user mix (MPSS vs. FSS) on any given transponder is determined such that the interference limits at the neighboring transponders is sufficiently utilized while taking full advantage of the bandwidth and dynamic range of the target transponder. From a regulatory point of view, the mixed MPSS and FSS service appears identical to the conventional MPSS service where some of the users do not move and have very large antennae with very small side lobes.

Design constraints imposed on MPSS (AMSS) may lead to more interference than an FSS service would produce. Conversely, an FSS service may have a lower interference profile while using more transponder dynamic range. The communication system according to the present invention allows users to mix MPSS (AMSS) and FSS services such that transponder dynamic range and interference limits are utilized in the most efficient manner.

Those skilled in the art can now appreciate from the foregoing description that the broad teachings of the present invention can be implemented in a variety of forms.

## Claims

1. A method of providing broadband communications for mobile plat-forms (74), comprising the steps of:
providing a mobile platform (74) including a first receiver subsystem (80) and a first transmitter subsystem (84);
communicating with a satellite (38) and said mobile platform (74) using a ground station (54) with a second transmitter subsystem (44) and a second receiver subsystem (48);
framing said Fixed Satellite Service data and Mobile Platform Satellite Service data as Internet Protocol packets,
assigning one or more Internet protocol addresses to said Fixed Satellite Service data on said forward link,
transmitting a forward link (58) to said satellite (38) and said mobile platform (74) using said second transmitter subsystem (44) of said ground station (54), wherein said forward link includes Fixed Satellite Service data in a first frequency band and Mobile Platform Satellite Service data in said first frequency band,
connecting a mobile platform network (82) to said first receiver subsystem (80); and
connecting user communication devices (140) to said mobile platform network (82), wherein said first frequency band is the Ku frequency band between 10.7 and 15.0 GHz, and
transmitting a return link (62) to said satellite (38) and said ground station (54) using said first transmitter subsystem (84) of said mobile platform (74), wherein said return link (62) includes Fixed Satellite Service data in a second frequency band and Mobile Platform Satellite Service data in said second frequency band,
connecting a mobile platform network (82) to said first transmitter subsystem (84);
connecting user communication devices (140, to said mobile platform network (82), wherein said second frequency band is the Ku frequency band between 10.7 and 15 GHz, **characterised by** the steps of :
applying multiple access coding to said Fixed Satellite Service data on said return link,
mixing the Fixed Satellite Service data and the Mobile Platform Satellite Service data to a mixed service, and
modeling a Mobile Satellite Service signal power spectral density based on an antenna of the mobile platform (74), modeling a Fixed Satellite Service signal power spectral density based on an antenna of the ground station (54),
summing the Fixed Satellite Service signal power spectral density and the Mobile Satellite Service signal power spectral density,
determining the mixed service on any transponder of the satellite (38) such that interference limits at neighboring transponders are sufficiently utilized while taking advantage of the bandwidth and dynamic range of the transponder.

2. The method of claim 1, further comprising the step of:
compressing said Internet protocol packets.

3. The method of claim 1, further comprising the step of:
encrypting said Internet protocol packets.

4. The method of claim 1, further comprising the step of:
bulk compressing said Fixed Satellite Service data and Mobile Platform Satellite Service data.

5. The method of claim 1, further comprising the step of:
bulk encrypting said Fixed Satellite Service data and Mobile Platform Satellite Service data.

6. The method of claim 1, wherein said multiple access coding is selected from CDMA, FDMA and TDMA.

## Patentansprüche

1. Verfahren zum Bereitstellen einer Breitbandkommunikation für mobile Plattformen (74), mit den folgenden Schritten:
Bereitstellen einer mobilen Plattform (74), die ein erstes Empfänger-Untersystem (80) und ein erstes Übertragungs-Untersystem (84) aufweist;
Kommunizieren mit einem Satellit (38) und der mobilen Plattform (74) unter Verwendung einer Bodenstation (54) mit einem zweiten Übertragungs-Untersystem (44) und einem zweiten Empfänger-Untersystem (48);
Rahmen der Ortsfeste-Satelliten-Dienstleistungs-Daten und Mobile-Plattform-Satelliten-Dienstleistungs-Daten als Internetprotokollpakete,
Zuweisen einer oder mehrerer Internetprotokolladressen zu den Ortsfeste-Satelliten-Dienstleistungs-Daten auf der Vorwärtsverbindung,
Übertragen einer Vorwärtsverbindung (58) zu dem Satelliten (38) und der mobilen Plattform (74) unter Verwendung des zweiten Übertragungs-Untersystems (44) der Bodenstation (54), wobei die Vorwärtsverbindung Ortsfeste-Satelliten-Dienstleistungs-Daten in einem ersten Frequenzband und Mobile-Plattform-Satelliten-Dienstleistungs-Daten in dem ersten Frequenzband aufweist,
Verbinden eines mobilen Plattform-Netzwerks (82) mit dem ersten Empfänger-Untersystem (80); und
Verbinden von Nutzerkommunikationseinrichtungen (140) mit dem mobilen Plattform-Netzwerk (82), wobei das erste Frequenzband das Ku-Frequenzband zwischen 10,7 und 15,0 GHz ist, und
Übertragen einer Rückwärtsverbindung (62) zu dem Satelliten (38) der Bodenstation (54) unter Verwendung des ersten Übertragungs-Untersystems (84) auf der mobilen Plattform (74), wobei die Rückwärtsverbindung (62) Ortsfeste-Satelliten-Dienstleistungs-Daten in einem zweiten Frequenzband und Mobile-Plattform-Satelliten-Dienstleistungs-Daten in dem zweiten Frequenzband aufweist,
Verbinden eines mobilen Plattform-Netzwerks (82) mit dem ersten Übertragungs-Untersystem (84);
Verbinden der Nutzerkommunikationseinrichtungen (140) mit dem mobilen Plattform-Netzwerk (82), wobei das zweite Frequenzband das Ku-Frequenzband zwischen 10,7 und 15,0 GHz ist, **gekennzeichnet durch** die folgenden Schritte:
Anwenden einer Multiplen-Zugangs-Codierung auf die Ortsfeste-Satelliten-Dienstleistungs-Daten auf der Rückwärtsverbindung,
Mischen der Ortsfeste-Satelliten-Dienstleistungs-Daten und der Mobile-Plattform-Satelliten-Dienstleistungs-Daten in eine gemischte Dienstleistung, und
Modellieren einer Mobile-Satelliten-Dienstleistungs-Signalleistungspektraldichte basierend auf einer Antenne der mobilen Plattform (74), Modellieren einer Ortsfeste-Satelliten-Dienstleistungs-Signalleistungsspektraldichte basierend auf einer Antenne der Bodenstation (54),
Summieren der Ortsfeste-Satelliten-Dienstleistungs-Signalleistungsspektraldichte und der Mobile-Satelliten-Dienstleistungs-Signalleistungsspektraldichte,
Bestimmen der gemischten Dienstleistung auf jeden Transponder der Satelliten, so dass Interferenzbeschränkungen an benachbarten Transpondern genügend genutzt werden, während die Bandbreite und der Dynamikbereich des Transponders vorteilhaft genutzt werden.

2. Verfahren nach Anspruch 1, des Weiteren mit dem folgenden Schritt:
Komprimieren der Internetprotokollpakete.

3. Verfahren nach Anspruch 1, des Weiteren mit dem folgenden Schritt:
Verschlüsseln der Internetprotokollpakete.

4. Verfahren nach Anspruch 1, des Weiteren mit dem folgenden Schritt:
bulk-komprimieren der Ortsfeste-Satelliten-Dienstleistungs-Daten und der Mobile-Plattform-Satelliten-Dienstleistungs-Daten.

5. Verfahren nach Anspruch 1, des Weiteren mit dem folgenden Schritt:
bulk-verschlüsseln der Ortsfeste-Satelliten-Dienstleistungs-Daten und der Mobile-Plattform-Satelliten-Dienstleistungs-Daten.

6. Verfahren nach Anspruch 1, wobei das Multiple-Zugangs-Codieren von CDMA, FDMA und TDMA ausgewählt ist.

## Revendications

1. Procédé pour fournir des communications à large bande pour des plates-formes mobiles (74), comprenant les étapes consistant à:
fournir une plate-forme mobile (74) comprenant un premier sous-système récepteur (80) et un premier sous-système émetteur (84) ;
communiquer avec un satellite (38) et ladite plate-forme mobile (74) en utilisant une station terrienne (54) avec un deuxième sous-système émetteur (44) et un deuxième sous-système récepteur (48) ;
mettre en forme les données de service fixe par satellite et les données de service par satellite pour plates-formes mobiles en paquets protocole Internet,
attribuer une ou plusieurs adresses protocole Internet auxdites données de service fixe par satellite sur une liaison aller,
transmettre une liaison aller (58) audit satellite (38) et à ladite plate-forme mobile (74) en utilisant ledit deuxième sous-système émetteur (44) de ladite station terrienne (54), ladite liaison aller comprenant des données de service fixe par satellite dans une première bande de fréquences et des données de service par satellite pour plates-formes mobiles dans ladite première bande de fréquence,
connecter un réseau de plates-formes mobiles (82) audit premier sous-système récepteur (80) ; et à
connecter des dispositifs de communication d'utilisateur (140) audit réseau de plates-formes mobiles (82), ladite première bande de fréquences étant la bande de fréquences Ku située entre 10,7 et 15,0 GHz, et à
transmettre une liaison retour (62) audit satellite (38) et à ladite station terrienne (54) en utilisant ledit premier sous-système émetteur (84) de ladite plate-forme mobile (74), ladite liaison retour (62) comprenant des données de service fixe par satellite dans une deuxième bande de fréquences et des données de service par satellite pour plates-formes mobiles dans ladite deuxième bande de fréquences,
connecter un réseau de plates-formes mobiles (82) audit premier sous-système émetteur (84) ;
connecter des dispositifs de communication d'utilisateur (140) audit réseau de plates-formes mobiles (82), ladite deuxième bande de fréquences étant la bande de fréquences Ku située entre 10,7 et 15,0 GHz, **caractérisé par** les étapes consistant à :
appliquer un codage d'accès multiple auxdites données de service fixe par satellite sur ladite liaison retour,
mélanger les données de service fixe par satellite et les données de service par satellite pour plates-formes mobiles dans un service mixte, et à
modéliser une densité spectrale de puissance de signal de service mobile par satellite en se basant sur une antenne de la plate-forme mobile (74),
modéliser une densité spectrale de puissance de signal de service fixe par satellite en se basant sur une antenne de la station terrienne (54),
additionner la densité spectrale de puissance de signal de service fixe par satellite et la densité spectrale de puissance de signal de service mobile par satellite,
déterminer le service mixte sur n'importe quel répéteur du satellite (38) de manière à ce que les limites d'interférence aux répéteurs voisins soient suffisamment utilisées tout en tirant profit de la largeur de bande et de la gamme dynamique du répéteur.

2. Procédé selon la revendication 1, comprenant en outre l'étape consistant à:
compresser lesdits paquets protocole Internet.

3. Procédé selon la revendication 1, comprenant en outre l'étape consistant à:
chiffrer lesdits paquets protocole Internet.

4. Procédé selon la revendication 1, comprenant en outre l'étape consistant à:
compresser en masse lesdites données de service fixe par satellite et lesdites données de service par satellite pour plate-formes mobiles.

5. Procédé selon la revendication 1, comprenant en outre l'étape consistant à:
chiffrer en masse lesdites données de service fixe par satellite et lesdites données de service par satellite pour plates-formes mobiles.

6. Procédé selon la revendication 1, dans lequel ledit codage d'accès multiple est sélectionné parmi CDMA, FDMA et TDMA.
